(19)

**Europäisches Patentamt**
**European Patent Office**
**Office européen des brevets**

(11) **EP 4 764 671 A1**

(12) **EUROPEAN PATENT APPLICATION**

(43) Date of publication:
24.06.2026 Bulletin 2026/26

(21) Application number: 24307260.0

(22) Date of filing: 20.12.2024

(51) International Patent Classification (IPC):
*G02C 7/02* (2006.01)    *G02C 7/10* (2006.01)

(52) Cooperative Patent Classification (CPC):
**G02C 7/022; G02C 7/104; G02C 7/105;**
G02C 2202/20; G02C 2202/24

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Essilor International**
**94220 Charenton-Le-Pont (FR)**

(72) Inventors:
• **BARANTON, Konogan**
**75012 Paris (FR)**
• **GOETHALS, Sarah**
**38100 Grenoble (FR)**

• **HAMLAOUI, Samy**
**64000 Pau (FR)**
• **PIC, Eléonore**
**94300 Vincennes (FR)**
• **FERMIGIER, Bruno**
**94700 Maison Alfort (FR)**
• **MARRE, Olivier**
**75019 Paris (FR)**
• **GOLDIN, Matias Alejandro**
**75014 Paris (FR)**
• **LOUBOUTIN, Awen**
**94220 Charenton-le-Pont (FR)**
• **VIRGILI, Samuele**
**75005 Paris (FR)**

(74) Representative: **Cabinet Novitech**
**188 Grande rue Charles de Gaulle**
**94130 Nogent-sur-Marne (FR)**

(54) **USING FILTER TO IMPROVE ABNORMAL REFRACTION CONTROL EFFICIENCY**

(57)    An optical lens intended to be worn in front of an eye of a wearer, the optical lens comprising:
- a refraction area having at least a first refractive power (PPO) based on a prescription adapted for the eye of the wearer;
- at least one filtering zone, said at least one filtering zone comprising at least a filtering function reducing the transmission of light passing through it over a range of wavelength comprised in the visible wavelength range so that the transmission value Tlum is smaller than or equal to 50%,
characterized in that a projection of the at least one filtering zone over a measuring plane is not convex and that a part of the optical lens corresponding to the complementary zone of the projected filtering zone has a transmission value Tlum greater than or equal to 90%.

Fig. 1

**Description**

**TECHNICAL FIELD**

The disclosure relates to the control of the progression of the abnormal refraction of the eye, and more particularly to an optical lens comprising at least one filtering zone.

**BACKGROUND**

In recent years, there has been a rise in the development of solutions aimed at controlling the progression of abnormal refraction in the eye, such as myopia. One of the most promising solutions proposes to create a defocus in front of the retina that generates a myopia stop signal controlling the elongation of the eye and slowing down the progression of myopia. These new myopia control devices typically consist of lenses comprising microlenses that refract part of the light in front and/or behind of the retina of the eye of the wearer.

While the existing myopia control solutions have demonstrated high efficacy, they often come with a trade-off, as they may diminish the wearer's visual acuity and make the ophthalmic lenses less comfortable, particularly for the intended demographic of young individuals. Indeed, generating a defocus in front and/or behind the retina often leads to the generation of visual artifacts and decrease in contrast.

Recent findings suggest that some unwanted optical effects of the myopia control devices does not contribute to providing a clear vision nor the effect of slowing down the abnormal refraction progression. Even worse, some of these unwanted optical elements may reduce the efficiency of the control of the abnormal refraction progression. For example, it has been observed that while a part of the light passing through a microlens focuses in front of the retina of the wearer, thereby creating a control signal, a small part of this light will be focused behind the retina of the wearer, thereby creating a conflicting signal that reduces the efficiency of the myopia control device.

Therefore, there is a need for a solution that can effectively stop, or at least reduce the unwanted optical effects of the optical lens that reduce the effect of slowing down the progression of the abnormal refraction of the eye of the wearer.

**SUMMARY**

To this end, the disclosure proposes an optical lens intended to be worn in front of an eye of a wearer, the optical lens comprising:

- a refraction area having at least a first refractive power (PPO) based on a prescription adapted for the eye of the wearer;
- at least one filtering zone, said at least one filtering zone comprising at least a filtering function reducing the transmission of light passing through it over a range of wavelength comprised in the visible wavelength range so that the transmission value Tlum is smaller than or equal to 50%,

characterized in that a projection of the at least one filtering zone over a measuring plane is not convex and that a part of the optical lens corresponding to the complementary zone of the projected filtering zone has a transmission value Tlum greater than or equal to 90%.

Advantageously, the optical lens according to the disclosure allows reducing the unwanted optical effects reducing the control effect on slowing down the progression of an abnormal refraction of an eye.

According to further embodiments which can be considered alone or in combination:

- the optical lens comprises a plurality of filtering zones; and/r

- at least part, preferably more than 50%, for example all, of the filtering zones surrounds at least one independent island-shape defocusing area; and/or

- the at least one filtering zone has an outer contour inscribable in a bounding circle (Ci) having a radius (Ri) smaller than or equal to 1.5 mm preferably smaller than or equal to 1.0 mm; and/or

- at least part of, for example all, the independent island-shape defocusing areas are refractive defocusing elements having an average mean refractive power (Pi) different from the first refractive power (PPO) of the refraction area; and/or

- the difference expressed in absolute terms between the first refractive power (PPO) and the average mean refractive power (Pi) of an independent island-shape defocusing area |PPO-Pi| is greater than 0.12D; and/or

- at least part of, for example all, the independent island-shape defocusing areas comprise diffractive microstructures; and/or

- the diffractive microstructures form a pattern producing a discontinuous phase shift on the light crossing the diffractive microstructures; and/or

- the diffractive microstructures have a pillar shape having a lateral resolution greater than or equal to 250 nm, preferably 1.0 $\mu$m, more preferably 3.0 $\mu$m, for example 10 $\mu$m, and smaller than or equal to 100 $\mu$m, for example 2.0 mm, and/or a height resolution greater than or equal to 0.1 $\mu$m, and smaller than or equal to 10 $\mu$m; and/or

- at least part of the filtering zone surrounds at least one island shape refraction area; and/or

- the filtering function of at least part of, for example all, the filtering zone is an absorption function; and/or

- the absorption function has a spatial gaussian profile; and/or

- the filtering function of the at least one filtering zone is a phase shift function; and/or

- the filtering function of at least part of, for example all, the filtering zone is a scattering function; and/or

- the filtering function of the at least one filtering zone is a blue filtering function reducing the transmission of light comprised in the wavelength range between 380 nm and 500 nm; and/or

- the filtering function of the at least one filtering zone is a red filtering function reducing the transmission of light in the wavelength range between 550nm and 700nm; and/or

- within an annular region of the optical lens having an inner diameter greater than 9 mm and an outer diameter smaller than 57 mm, and comprising a geometrical center located at a distance from an optical center of the lens element smaller than 1mm, the ratio between the sum of areas of the parts of the defocusing areas located inside said annular region and the area of said annular region is comprised between 3% and 80%, preferably between 20% and 70%, preferably between 30% and 60%, and more preferably between 40% and 50%; and/or

- for every circular zone having a radius comprised between 2 and 4 mm comprising a geometrical center located at a distance of the framing reference that faces the pupil of the user gazing straight ahead in standard wearing conditions equal to said radius + 5mm, the ratio between the sum of areas of the parts of the defocusing areas located inside said circular zone and the area of said circular zone is comprised between 20% and 70%; and/or

- the plurality of filtering zones are independent; and/or

- the plurality of filtering zones are non-contiguous; and/or

- the plurality of filtering zones are contiguous; and/or

- at least part of, preferably more than 50%, for example all, the filtering zones have similar filtering function; and/or

- the areas other than the filtering areas are transparent.

**BRIEF DESCRIPTION OF THE DRAWINGS**

Embodiments of the invention will now be described, by way of example only, and with reference to the following drawings in which:

- Figure 1 illustrates a schematic front view of an optical lens according to an embodiment of the disclosure;

- Figures 2A to 2B illustrate schematic profile view of an optical lens according to embodiments of the disclosure;

- Figure 3 illustrates a schematic front view of an optical lens according to an embodiment of the disclosure; and

- Figure 4 illustrates a schematic front view of an optical lens according to an embodiment of the disclosure.

Elements in the figures are illustrated for simplicity and clarity and have not necessarily been drawn to scale. For example, the dimensions of some of the elements in the figure may be exaggerated relative to other elements to help to improve the understanding of the embodiments of the present invention.

**DETAILLED DESCRIPTION**

In the reminder of the description, terms like « up », « bottom », « horizontal », « vertical », « above », « below », « front », « rear » or other words indicating relative position may be used. These terms are to be understood in the wearing conditions of the optical lens.

The disclosure relates to an optical lens intended to be worn in front of an eye of a wearer in specific wearing conditions, for example in standard viewing conditions.

In the context of the present disclosure, the term "optical lens" can refer to a contact lens or a spectacle optical lens edged to fit a specific spectacle frame or an ophthalmic lens or a progressive multifocal addition lens, an AR, VR, MR, or XR smart eyewear member that overlays or combines electronic display information with the myopia control device, or an optical device adapted to be positioned on an ophthalmic lens. The optical device may be positioned on the front or back surface of the ophthalmic lens. The optical device may be an optical patch or film. The optical device may be adapted to be removably positioned on the ophthalmic lens for example a clip configured to be clipped on a spectacle frame comprising the ophthalmic lens.

The wearing conditions are to be understood as the position of the optical lens with relation to the eye of a wearer, for example defined by a pantoscopic angle, a wrap angle, a Cornea to lens distance, and eventually any of a Pupil-cornea distance, a center of rotation of the eye (CRE) to pupil distance, a CRE to lens distance and.

The Cornea to lens distance is the distance along the visual axis of the eye in the primary position (usually taken to be the horizontal) between the cornea and the back surface of the lens; for example comprised between 8 and 16 mm, preferably 10 and 14 mm, more preferably equal to 12mm.

The Pupil-cornea distance is the distance along the visual axis of the eye between its pupil and cornea; usually comprised between 1 and 4 mm, for example equal to 2mm.

The CRE to pupil distance is the distance along the visual axis of the eye between its center of rotation (CRE) and cornea; for example comprised between 10 and 15 mm, preferably 11 and 12 mm, more preferably equal to 11.5mm.

The CRE to lens Q'O distance is the distance along the visual axis of the eye in the primary position (usually taken to be the horizontal) between the CRE of the eye and the back surface of the lens, for example comprised between 20 and 30 mm, preferably 22.5 and 28 mm, more preferably equal to 25.5mm.

The pantoscopic angle is the angle in the vertical plane, at the intersection between the back surface of the lens and the visual axis of the eye in the primary position (usually taken to be the horizontal), between the normal to the back surface of the lens and the visual axis of the eye in the primary position; for example comprised between -25° and +5°, preferably -12° and 0°, more preferably between -10° and -6°, for example equal to -8°, preferably equal to 0°.

The wrap angle is the angle in the horizontal plane, at the intersection between the back surface of the lens and the visual axis of the eye in the primary position (usually taken to be the horizontal), between the normal to the back surface of the lens and the visual axis of the eye in the primary position for example comprised between -10° and +25°, preferably 0° and 10°, more preferably between 0° and +5°, for example equal to 0°.

An example of standard wearing condition may be defined by a pantoscopic angle of - 8°, a Cornea to lens distance of 12 mm, a Pupil-cornea distance of 2 mm, a CRE to pupil distance of 11.5 mm, a CRE to lens distance of 25.5 mm and a wrap angle of 0°.

Another example of standard wearing condition more adapted for younger wearers may be defined by a pantoscopic angle of 0°, a Cornea to lens distance of 12 mm, a Pupil-cornea distance of 2 mm, a CRE to pupil distance of 11.5 mm, a CRE to lens distance of 25.5 mm and a wrap angle of 0°.

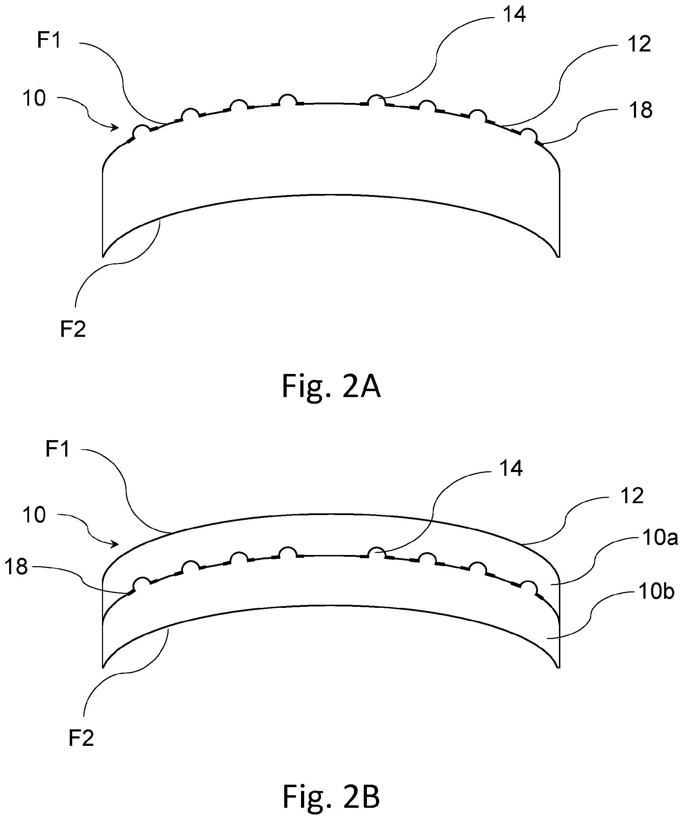

As illustrated in figure 2a, the optical lens 10 may comprise an object-side surface F1 formed as a convex curved surface toward an object-side. The optical lens may comprise an eye-side surface F2 formed as a concave surface towards the eye of the wearer and opposed to the object-side surface F1. Alternatively, the object-side surface F1 and/or the eye-side surface F2 may be any one of a plano surface, a locally curved surface, a fully convex surface, a fully concave surface, or a complex surface.

The optical lens 10 may be formed by a plurality of lens members put in close contact together. In the example illustrated in figure 2b, the optical lens 10 comprises a first lens member 10a comprising an object-side surface F1 formed as a convex curved surface toward an object-side and a complementary surface opposed to the object-side surface. The optical lens may further comprise a second lens member 10b comprising an eye-side surface F2 formed as a concave surface towards the eye of the wearer and a complementary surface opposed to the eye-side surface. Both complementary surfaces of the first and second lens members 12a and 12b are designed to fit precisely into the other to ensure a tight and secure fit when the two lens members are brought together.

At least part, for example all, of the object-side surface F1 and/or the eye-side surface F2 of the optical lens may be covered by at least one layer of coating element. The at least one layer of coating element may comprise features selected from the group consisting of anti-scratch, anti-reflection, anti-smudge, anti-dust, UV30 filtration, blue light-filtration, anti-abrasion features. The layer of coating element may be provided using any known techniques. For example, the layer of coating may be provided using a dipping process where the optical lens simultaneously receives a layer of coating on each surface.

The optical lens may be made of any suitable material such as mineral material like glass, or organic material like plastic, resin. The index of refraction of the material used for the optical lens may be suitably selected to obtain targeted optical properties. Preferably, the index of refraction n of the holder is comprised between 1, 3 and 1.7 when measured for a wavelength of 550 nm. For example, the index of refraction n may be smaller than or equal to, or between any two of, 1.9; 1.8; 1.75; 1.73; 1.71; 1.69; 1.67; 1.65; 1.63; 1.61; 1.59; 1.57; 1.55; 1.54; 1.53; 1.52; 1.51; 1.50; 1.49; 1.48; 1.47; 1.46; 1.45; or lower, and/or greater than or equal to, or between any two of 1.1; 1.2; 1.25; 1.3; 1.31; 1.33; 1.35; 1.37; 1.39; 1.41; 1.43; 1.45; or higher. When the optical lens comprises a plurality of lens members, the indices of refraction of the material of the lens members may be different. Alternatively, the indices of refraction of the material of the lens members may be identical.

The object-side surface F1 and/or the eye-side surface F2 of the optical lens may have any suitable shape, such as spherical or non-spherical. The term "spherical shape" refers to the curvature of the lens surface, which closely follows the shape of a perfect or almost perfect sphere. A spherical surface has a substantially uniform curvature over the entire surface of the optical lens, which remains substantially the same in all meridians. A non-spherical surface should be understood as not being uniform over the entire surface of the optical lens, with different curvatures in different meridians.

The object-side surface F1 and/or the eye-side surface F2 of the optical lens may have a toric shape. A toric surface has two principal meridians that are perpendicular to each other, often referred to as the "steep" and "flat" meridians. The curvature of the surface in these meridians is different.

The object-side surface F1 and/or the eye-side surface F2 of the optical lens may have an aspherical shape. An aspherical surface has a mean curvature that continuously varies over the surface of the optical lens. The curvature along different meridians varies from the geometrical center of the optical lens towards the periphery, for example, the curvature of the surface increases or decreases towards the peripheral part of the surface. The shape of an aspherical surface may be described using a mathematical equation, such as a conic section or a polynomial equation or a sum of a conic section and of a polynomial equation. As such, the surface may be rotationally symmetrical. Alternatively, an aspherical surface may not be rotationally symmetrical.

The object-side surface F1 and/or the eye-side surface F2 of the optical lens may have progressive addition lens profile. In the sense of the disclosure, a "progressive addition lens profile surface" should be understood as a surface comprising two areas having different average mean spheres, and a third areas joining the two first areas, along which the curvature value of the surface transitions from the first to the second average mean sphere of the corresponding two areas.

Alternatively, the object-side surface F1 and/or the eye-side surface F2 of the optical lens may have a plano shape. A plano surface has no curvature over the entire surface of the optical lens.

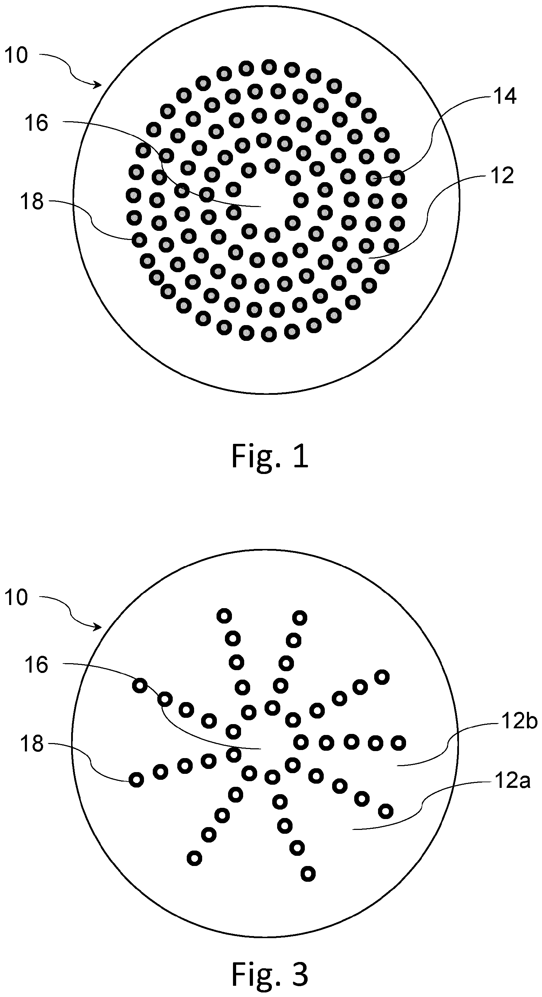

As illustrated in figures 1 and 2, the optical lens 10 intended to be worn in front of an eye of a wearer comprises a refraction area 12.

The refraction area 12 has at least a first refractive power PPO based on a prescription adapted for the eye of the wearer. In the sense of the disclosure, a refractive power is to be understood as being measured for a wavelength of 550 nm. For example, the refractive area is adapted for a wearer according to a prescription to restore a presbyope's ability to see clearly at all distances, but also to optimally respect all physiological visual functions such as foveal vision, extra-foveal vision, binocular vision and to minimize unwanted astigmatisms.

For example, the first refractive power of the refraction area is configured to focalize incident light on the retina of the wearer, for example on the fovea of the eye of the wearer. In other words, when the wearer wearing the optical lens in standard wearing conditions looks straight ahead at an object located at infinity distance, at least part of incident light emitted by said object passing through the refraction area, will be focused on the retina, for example on the fovea, of the unaccommodated eye of said wearer.

The abnormal refraction of an eye of the wearer may be any of myopia, hyperopia, astigmatism, or presbyopia.

Advantageously, the first refractive power of the refractive area allows providing good visual acuity and good visual comfort to the wearer by correcting the defect of its eye.

The term "prescription" is to be understood to mean a set of optical characteristics of optical power, of astigmatism, of prismatic deviation, determined by an ophthalmologist or optometrist in order to correct the vision defects of the eye, for example by means of a lens positioned in front of his eye. For example, the prescription for a myopic eye comprises the values of optical power and of astigmatism with an axis for the distance vision. The prescription may comprise an indication that the eye of the wearer has no defect and that no refractive power is to be provided to the wearer.

The refraction area may further comprise at least a second refractive power different from the first refractive power PPO. In the sense of the disclosure, the two refractive powers are considered different when the difference between the two refractive powers is greater than or equal to 0.5 D in absolute terms.

The refraction area may have a continuous variation of refractive power. For example, the refractive area may have a progressive addition design. A progressive addition design is characterized by a first refractive power, for example adapted for far vision, a second refractive power, for example adapted for near vision, and a progression of refractive power between these two refractive powers.

As illustrated in figure 1, the optical lens 10 intended to be worn in front of an eye of a wearer further comprises at least one filtering zone 18. For example, the optical lens comprises a plurality of filtering zones 18.

As illustrated in figure 1, the plurality of filtering zones may be independent and non-contiguous. Alternatively, the plurality of filtering zones may be independent and continuous.

Preferably, the at least one filtering zone may have an annular shape. Advantageously, the annular shape of the filtering zones allows reducing the unwanted portions of the light beams that are focused farther than the retina and contribute to the progression of the abnormal refraction of the eye.

The at least one filtering zone comprises at least a filtering function reducing the transmission of light passing through it. Preferably, the filtering function is to be considered for wavelengths of light comprised in the visible spectrum, e.g., between 380 and 750 nm, preferably between 450 and 700 nm. The filtering function of the filtering zone reduces the transmission of light so that the transmission value Tlum is smaller than or equal to 50%. In the sense of the disclosure, the transmission value Tlum of the filtering function corresponds to the proportion of incident light that is transmitted.

The transmission value Tlum of the filtering function may be defined as follows:

$$T_{lum} = \frac{\int_0^\infty I(\lambda) \cdot T(\lambda) \cdot V(\lambda) d\lambda}{\int_0^\infty I(\lambda) \cdot V(\lambda) d\lambda}$$

where $I(\lambda)$ is the spectral radiant flux or intensity of the standard illuminant, $T(\lambda)$ is the spectral transmittance function, and $V(\lambda)$ is the luminous efficiency function.

The spectral transmittance function may be defined by the following formula:

$$T(\lambda) = \frac{I_{transmitted}(\lambda)}{I_{incident}(\lambda)}$$

where $I_{incident}(\lambda)$ is the intensity of incident light at wavelength $\lambda$ entering the optical lens and $I_{transmitted}(\lambda)$ the intensity of light at wavelength $\lambda$ transmitted through the optical lens.

The luminous efficiency function represents the average spectral sensitivity of human visual perception of light. It should be understood that it is not an absolute reference to any particular individual, but is a standard observer representation of visual sensitivity of a theoretical human eye. Typically, the luminous efficiency function corresponds to the CIE 1924 photopic $V(\lambda)$ luminosity function with is included in the 1931 color matching function as the $y(\lambda)$ function.

In other words, for a light ray having a wavelength comprised between 380 nm and 750 nm that passes straight throughout the at least one filtering area of the optical lens, the amount of light entering the optical lens through the filtering zone is significantly greater than the amount of light exiting the optical lens. For example, more than 50%, preferably more than 70%, even more preferably more than 80% of light passing throughout the filtering zone is filtered by the filtering function.

Advantageously, the filtering area allows improving the efficiency of slowing down the progression of the abnormal refraction of the eye without impacting too much the visual acuity and/or vision comfort of the wearer.

Preferably, the projection of the at least one filtering zone over a measuring plane is not convex. In the sense of the disclosure, "not being convex" should be understood as not forming a convex domain. Typically, a convex domain is defined as a two-dimensional region in which any two points included within said region can be connected by a straight line that lies entirely within said two-dimensional region. Mathematically, a domain D would be considered convex if for any two points P1 and P2 in D, the line segment L connecting P1 and P2 satisfies $L \subseteq D$.

The measuring plane may correspond to a two-dimensional plane orthogonal to a reference axis of the optical lens such as for example the optical axis passing through the optical center and/or geometrical center of the optical lens and the center of rotation of the eye of the wearer. Typically, the measuring plane may be orthogonal to the antero-posterior axis of the wearer's head when the wearer is wearing the optical lens in standard wearing conditions. The projection of the filtering zone onto the measuring plane may represent the two-dimensional outline of the filtering zone as viewed along the reference axis. The projection of the filtering zone onto the measuring plane may correspond to a set of points on the measuring plane corresponding to the filtering zone's boundary and internal area, as determined by an orthogonal projection along the reference axis from the three-dimensional geometry of the optical lens.

At least part, preferably more than 50%, even more preferably more than 75%, for example all, of the area of the optical lens corresponding to the complementary zone of the projected filtering zone has a transmission value Tlum greater than or equal to 90%. Typically, for a light ray having a wavelength comprised between 380 nm and 750 nm passing straight throughout this area of the optical lens corresponding to the complementary zone of the projected filtering zone area transmits light over the visible spectrum, the amount of light entering the optical lens through the refractive area is very close or substantially the same as the amount of light exiting the optical lens. It should be understood that, even in a high transmittance optical system, a small amount, for example up to 10% of light passing throughout it is usually dispersed, for example reflected or diffracted.

The filtering function of at least part, preferably more than 50%, for example all, of the filtering zones may be an absorption function. Typically, an absorption function is characterized by the transfer of energy from incident light to the material interacting with light. In the sense of the disclosure, an absorption function is defined by the proportion of incident light absorbed by the filtering zone. For example, the absorption function A at a given wavelength $\lambda$ may be expressed by the following function: $A(\lambda) = 1 - Tlum(\lambda)$. Alternatively, the absorption function A may be expressed by the following function $A(\lambda) = \log_{10}(Tlum(\lambda))$.

The absorption function of the at least one filtering zone may have a spatial gaussian profile. In the context of the disclosure, it should be understood that the filtering function varies spatially across the surface of the at least one filtering zone, thereby forming a Gaussian distribution. Typically, the absorption is strongest at a central point and decreases radially as the distance from the center increases. In the case of filtering zones having an annular shape, the absorption function will be minimal close to the inner diameter and outer diameter of said annular shape, and will progressively increase to reach a maximum value at the mean radius of the annular shape. Advantageously, the absorption function having a spatial gaussian profile allows minimizing the diffractive effects of the filtering zones.

The filtering function of at least part, preferably more than 50%, for example all, of the filtering zones may be a phase shift function. Typically, the phase of part of the light passing through a filtering zone having a phase shift function may be modified so that it creates destructive interference effectively reducing the intensity of incident light transmitted by said filtering zone.

The filtering function of at least part, preferably more than 50%, for example all, of the filtering zones may be a scattering function. Typically, part of the incident light passing through a filtering zone having a scattering function may be redirected or scattered towards different directions, thereby effectively reducing the intensity of incident light transmitted by said filtering zone.

The filtering function of the at least one filtering zone may be a blue filtering function. The blue filtering function selectively reduces the transmittance of light within the blue portion of the visible spectrum, i.e., wavelength of light comprised between 380 nm and 500 nm. In other words, for a light ray having a wavelength comprised between 380 nm and 500 nm that passes straight throughout the optical lens, the amount of light entering the optical lens through the filtering zone is significantly greater than the amount of light exiting the filtering zone. For example, more than 50%, preferably more than 70%, even more preferably more than 80% of light passing throughout the filtering zone is filtered by the blue filtering function.

The filtering function of the at least one filtering zone may be a red filtering function. The red filtering function selectively reduces the transmittance of light within the blue portion of the visible spectrum, i.e., wavelength of light comprised between 550 nm and 700 nm. In other words, for a light ray having a wavelength comprised between 550 nm and 700 nm that passes straight throughout the optical lens, the amount of light entering the optical lens through the filtering zone is significantly greater than the amount of light exiting the filtering zone. For example, more than 50%, preferably more than 70%, even more preferably more than 80% of light passing throughout the filtering zone is filtered by the blue filtering function.

When the optical lens comprises a plurality of filtering zones, at least part, preferably more than 50%, for example all, of the filtering zones have a similar filtering function. Alternatively, the filtering function of the filtering zone may vary over the optical lens.

Preferably, the areas other than the filtering areas may be transparent. In the sense of the disclosure, the expression "transparent" should be understood as not blocking the path of light as an opaque filter. In other words, transparent elements of the optical lens have a transmission value Tlum greater than 80%, preferably greater than 90%.

As illustrated in figure 1, the optical lens 10 intended to be worn in front of an eye of a wearer may comprise a comprises at least one defocusing area 14.

Preferably, the optical lens comprises a plurality of defocusing areas 14.

Preferably, the defocusing areas have a second optical function of not focusing an image on the retina of the eye of the wearer so as to generate a control signal slowing down the development of an abnormal refraction of an eye of a wearer. In other words, when the wearer wears the optical lens, for example in standard wearing conditions, and looks straight ahead at an object located at infinite distance, incident light emitted by this object and passing throughout the defocusing areas will create a defocus signal in front and/or behind the retina of the unaccommodated eye of the wearer.

As illustrated in figures 2a and 2b, the plurality of defocusing areas 14 may be superimposed on the optical lens 10. In the sense of the disclosure, the expression "superimposed" should be understood as located on the object-side surface F1 (front surface) of the optical lens and/or on the eye-side surface F2 (back surface) of the optical lens and/or in between the object-side and eye-side surfaces F1 and F2 (front and back surfaces) of the optical lens.

When the optical lens is formed by a plurality of lens member, the plurality of defocusing areas may be encapsulated within the optical lens. In the sense of the invention, "being encapsulated" should be understood as being surrounded, encased, protected in, or isolated from the outside of the lens element, as if in a capsule. In the embodiment illustrated in figure 2b, the defocusing areas are disposed on the complementary surface opposed to the eye-side surface F2 of the lens member 12b. However, it should be understood that the defocusing areas may be disposed on any of the complementary surfaces opposed to the object-side and/or the eye-side surfaces F1 and F2 of the lens members 12a and 12b.

Advantageously, having the defocusing areas being encapsulated within the optical lens allows protecting them. In addition, having the defocusing areas encapsulated allows facilitating lens surface treatments, for example the addition of coating layers such as abrasion resistance coating, UV filtration coating among others, without impacting the optical functions of the defocusing areas.

The defocusing areas may be formed on the optical lens using any of the well-known manufacturing techniques of the prior art. For example, the defocusing areas may be engraved, imprinted, etched, or embossed directly on a surface of the optical lens.

The defocusing areas may be made of the same material as the one of the rest of the optical lens on which they are superimposed. Alternatively, the defocusing areas and the rest of the optical lens may be made of different materials. For example, when the defocusing areas are encapsulated between two lens member, the defocusing areas may be made of a same first material as the lens member on which they are disposed, and be different from the second material of the second lens member encapsulating said defocusing areas.

The defocusing areas may be transparent. In the sense of the disclosure, the expression "transparent" should be understood as not blocking the path of light as an opaque filter. The defocusing areas may have a concave shape, a convex shape, or a more complex shape, such as Fresnel rings or a grating structure.

Each defocusing area may have a maximum height, e.g., measured in a direction orthogonal to the surface on which they are disposed, that is smaller than or equal to 1.0 millimeters (mm), such as, for example, less than or equal to or between any two of 0.9 mm, 0.8 mm, 0.7 mm, 0.6 mm, 0.5 mm, 0.4 mm, 0.3 mm, 0.2 mm, 0.1 mm, and greater than or equal to 1 micrometers ($\mu$m), such as, for example, more than or equal to or between any two of 5 $\mu$m, 10 $\mu$m, 20 $\mu$m, 30 $\mu$m, 40 $\mu$m, 50 $\mu$m, 60 $\mu$m, 70 $\mu$m, 80 $\mu$m, 90 $\mu$m, 100 $\mu$m. Typically, the average height of the defocusing areas is comprised between 1 and 200 $\mu$m, preferably between 1 and 100 $\mu$m, more preferably between 1 and 50 $\mu$m.

Each defocusing area may have a diameter or a pitch that is less than or equal to 2.0 mm, such as, for example, less than or equal to or between any two of 5.0 mm, 2.0 mm, 1.5 mm, 1.0 mm, 0.5 mm, 0.1 mm, 80 $\mu$m, 60 $\mu$m, 40 $\mu$m, 20 $\mu$m, or smaller. For example, the average diameter of the defocusing areas may be comprised between 0.1 mm and 5.0 mm, preferably between 0.25 mm and 4 mm, more preferably between 0.5 mm and 2.0 mm.

A defocusing area may be a lenslet. Lenslets have a contour shape circumscribed by a circle having a diameter smaller than or equal to 3.0 mm, for example smaller than or equal to 2.5mm, preferably smaller than or equal to 2.0mm, more preferably smaller than or equal to 1.5 mm, for example smaller than or equal to 1.0 mm. The lenslets may further be characterized by their largest inscribed circle that has a diameter greater than or equal to 0.1 mm, preferably greater than or equal to 0.2mm, more preferably greater than or equal to 0.4mm, even more preferably greater than or equal to 0.5mm, for example greater than or equal to 0.6 mm.

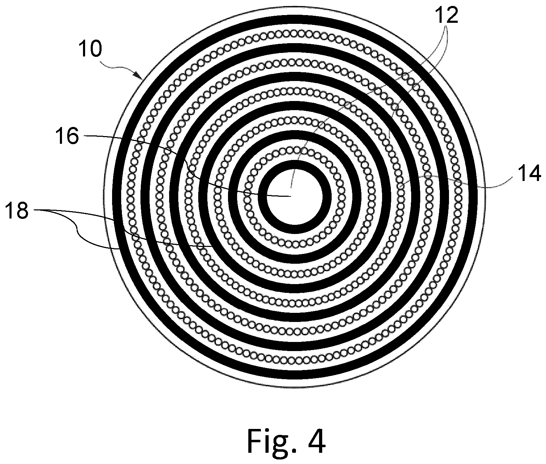

As represented in figure 1, at least part, for example more than 50%, preferably all, of the defocusing areas 14 may be non-contiguous. Alternatively, as illustrated in figure 4, at least part, for example more than 50%, preferably all, of the defocusing areas 14 may be contiguous.

In the sense of the disclosure, two defocusing areas located on a surface of the optical lens are contiguous if there is a path supported by said surface that links the two defocusing areas and if along said path one does not reach the basis surface of the optical lens on which the lenslets are superimposed.

When the surface on which the at least two defocusing areas are superimposed is spherical, the basis surface corresponds to said spherical surface. In other words, two defocusing areas superimposed on a spherical surface are contiguous if there is a path supported by said spherical surface and linking them and if along said path one may not reach the spherical surface.

When the surface on which the at least two defocusing areas are superimposed is non-spherical, the basis surface corresponds to the local spherical surface that best fits said non-spherical surface. In other words, two defocusing areas superimposed on a non-spherical surface are contiguous if there is a path supported by said non-spherical surface and linking them and if along said path one may not reach the spherical surface that best fit the non-spherical surface.

At least part, for example all, of the defocusing areas may be independent. In the sense of the disclosure, two defocusing areas are considered independent if producing independent images. In particular, when illuminated by a parallel beam "in central vision", each "independent contiguous optical element" forms on a plane in the image space a spot associated with it. In other words, when one of the defocusing areas is hidden, the spot disappears even if this defocusing area is contiguous with another defocusing area.

The density of defocusing areas on the optical lens may be comprised between 20% and 100%. For example, for every circular zone having a radius comprised between 2 and 4 mm comprising a geometrical center located at a distance of the optical center of the optical lens greater than, or equal to, said radius + 5mm, the ratio between the sum of areas of the parts of defocusing areas located inside said circular zone and the area of said circular zone is comprised between 20% and 100%, preferably between 20% and 80%, more preferably between 30% and 70%, for example between 40% and 60%.

The defocusing areas may be organized on the optical lens so that within an annular region of the optical lens having an inner diameter greater than 9 mm and an outer diameter smaller than 57 mm, and comprising a geometrical center located at a distance from an optical center of the optical lens smaller than 1mm, the ratio between the sum of areas of the parts of the defocusing areas located inside said annular region and the area of said annular region is comprised between 3% and 80%, preferably between 20% and 70%, preferably between 30% and 60%, and more preferably between 40% and 50%.

The defocusing areas may be organized over the entire surface of the optical lens. In other words, the ratio between the sum of the projected areas of the defocusing areas and the area of the optical element is substantially equal to 1.

As illustrated in figure 1, the optical lens 10 may comprise a central area 16 having a diameter greater than or equal to 2.0 mm, preferably 3.0 mm, more preferably 4.0 mm and smaller than or equal to 40 mm, preferably 30mm, more preferably 22 mm, free of defocusing areas 14. The centra area including a framing reference point that faces the pupil of the wearer gazing straight ahead in standard wearing conditions.

The defocusing areas may be positioned on a structured mesh, for example a squared mesh or a hexagonal mesh or a triangle mesh or an octagonal mesh.

As illustrated in figure 1, the defocusing areas 14 may be organized in a plurality of concentric rings centered on an optical center and/or a geometric center of the optical lens 10 on which the defocusing areas are superimposed. The radial distance between successive concentric rings of defocusing areas may be identical. Alternatively, the radial distance between successive concentric rings of defocusing areas, may vary. Preferably, the distance between two successive concentric rings of defocusing areas is greater than or equal to 1.0 mm, preferably 2.0 mm, more preferably 4.0 mm. Defocusing areas may be arranged along radial lines, such as the spokes of a wagon wheel, or arranged in triangular, cubic, hexagonal, or other geometric mixed tiling cluster formations.

At least part, preferably more than 50%, for example all of the defocusing areas may have a refractive optical function. In other words, the defocusing areas are configured to manipulate and bend at least part of the incident light rays passing throughout them towards a different direction. For example, at least part, for example more than 50%, preferably all of the defocusing areas are refractive defocusing elements having an average mean refractive power (Pi) different from the first refractive power (PPO) of the refraction area. Typically, the difference expressed in absolute terms between the first refractive power (PPO) and the average mean refractive power (Pi) of a defocusing area, for example an independent island-shape defocusing area or a refractive defocusing element, |PPO-Pi| is greater than 0.12D, preferably greater than 0.25D, more preferably greater than 0.5D.

The refractive optical function may have a spherical optical function, modifying the direction of incident light beams directions to focus into a single focused point, preferably located in front and/or behind the retina of the wearer. For example at least part, for example more than 50%, preferably all of the defocusing areas may be spherical defocusing elements.

Alternatively, the refractive optical function may have a non-spherical optical function modifying the direction of incident light beams towards different focus points, thereby creating a blur or volume of non-focused light preferably in front and/or behind the retina of the wearer. In the sense of the disclosure, the term "non-spherical optical function" should be understood as not having a single focus point. For example, at least part, for example more than 50%, preferably all of the defocusing areas may be non-spherical defocusing elements. Non-spherical defocusing elements do not have the same curvature and refractive power over their surface, and should be opposed to spherical defocusing elements which have a constant refractive power over their surface.

The refractive optical function may be a toric optical function. A toric optical function is typically characterized by a cylinder value and an orientation axis specifying the orientation of this cylindrical power. For example at least part, for example more than 50%, preferably all of the defocusing areas may be toric defocusing elements.

The refractive optical function may be an atoric optical function. An atoric optical function is characterized by a variation of optical power in different meridians. For example at least part, for example more than 50%, preferably all of the defocusing areas may be atoric defocusing elements.

The refractive optical function may be a multifocal optical function. In the sense of the disclosure, "multifocal optical function" includes bifocals (with two focal powers), trifocals (with three focal powers), progressive addition lenses (with continuously varying focal power), for example aspherical surface lenses. For example at least part, for example more than 50%, preferably all of the defocusing areas may be multifocal defocusing elements.

The refractive optical function may be an aspherical optical function. In the sense of the disclosure, an aspherical optical function is characterized by a continuous power evolution over the surface. For example, the refractive power may increase, or decrease, from a geometrical or optical center to the periphery of the defocusing areas. For example at least part, for example more than 50%, preferably all of the defocusing areas may be aspherical defocusing elements. An aspherical defocusing element may be characterized by a difference between the average mean optical power measured in the center of the optical element and the average mean optical power measured in the periphery of the optical element comprised between 0.1D and 10D, preferably between 0.5D and 3D, in absolute value. The center of the defocusing area may be defined by a circular area centered on the geometrical center of the defocusing area and having a diameter comprised between 0.1 mm and 0.5 mm, preferably equal to 0.2 mm. The periphery of the defocusing area may be defined by an annular zone centered on the geometrical center of the defocusing area and having an inner diameter comprised between 0.5 mm and 0.7 mm and an outer diameter comprised between 0.70 mm and 0.80 mm. According to an embodiment of the invention, the aspherical defocusing elements may have an optical power in their geometrical center comprised between 2.0D and 7.0D in absolute value, and an optical power in their periphery comprised between 1.5D and 6.0D in absolute value. The values of the optical power measured for the defocusing areas are to be considered in term of relative addition to the optical power of the optical lens on which said optical elements are superimposed.

The second optical function of the defocusing areas slowing down the development of the abnormal refraction of the eye of the wearer, for example the refractive optical function, may vary over the optical lens.

For example, the defocusing areas may be designed so that the average mean optical power of each defocusing area varies according to their relative position on optical lens.

According to an embodiment of the disclosure, the defocusing areas are organized so that along at least one section of the optical lens, the average mean optical power of the defocusing areas along said section varies towards the periphery of the optical lens. For example, the average mean optical power of the defocusing areas along the section may increase towards the periphery of the optical lens. Alternatively, the average mean optical power of the defocusing areas along the section may decrease towards the periphery of the optical lens.

Advantageously, having the average mean optical power of the defocusing areas varying according to the radial distance allows varying the defocus and by extension the intensity of the myopia control signal which lead to a better control of the development of the abnormal refraction of the eye.

According to another embodiment of the disclosure, the defocusing areas are organized so that along at least one section of optical lens, the average mean optical power of the defocusing area increases from a first point of said section to a second point, and further decreases from the second point towards the periphery of the optical lens, the second point being closer to the periphery of the optical lens than the first point.

According to another embodiment of the disclosure, the average mean optical power of the defocusing areas may vary according to their radial distance, or eccentricity, from a geometrical center and/or an optical center of the optical lens on which they are superimposed. In other words, the average mean optical power of a defocusing area located close to a geometrical or optical center of the optical lens may be higher than the average mean optical power of a defocusing area located close to the periphery of the optical lens.

For example, the defocusing areas may be designed so that the average mean optical power of the defocusing areas increases with the radial distance from a center of the optical lens up to a threshold distance, and further decrease with the radial distance past the threshold distance. For example, along a threshold distance smaller than or equal to 1.0 cm, preferably 2.0 cm, for example 3.0 cm, the average mean optical power the defocusing areas increases with the radial distance, and for a threshold distance greater than 1.0 cm, preferably 2.0 cm, for example 3.0 cm, the average mean optical power of the defocusing areas decreases with the radial distance.

The defocusing areas may be organized so that along all the sections passing through a geometrical center and/or an optical center of the optical lens, the average mean optical power of the defocusing areas increases towards the periphery of the optical lens. Alternatively, the defocusing areas may be organized so that along all the sections passing through a geometrical center and/or an optical center of the optical lens, the average mean optical power of the defocusing areas increases from a first point of the section to a second point of this section and further decrease from said second point towards the periphery of the optical lens, the second point being closer to the periphery of the optical lens than first point.

The second optical function of the defocusing area slowing down the development of the abnormal refraction of the eye of the wearer may be a diffractive optical function. The defocusing areas may be designed to control the phase and amplitude of the diffracted light, thereby modifying the shape of the incident light beam into a single focused point. Alternatively, the diffractive optical function can be used to split a single incident beam of light into multiple beams, redirecting them along different paths, thereby creating a blur or volume of non-focused light. The defocusing area may be formed by a plurality of diffractive defocusing elements.

The diffractive defocusing elements may be $\pi$-Fresnel defocusing elements. In the sense of the disclosure, $\pi$-Fresnel defocusing elements are Fresnel lenslets whose phase function $\psi(r)$ has $\pi$ phase jumps at the nominal wavelength $\lambda 0$, as opposed to unifocal Fresnel lenses whose phase jumps are multiple values of $2\pi$. A $\pi$-Fresnel lenslet diffracts light mainly in two diffraction orders (order 0 and +1), for example associated to dioptric powers $P(\lambda 0) = 0\,\delta$ and a positive one $P(\lambda 0) = 3\,\delta$, with $\lambda 0 = 550$ nm.

The diffraction efficiency of the two main orders of diffraction 0 and +1 of each $\pi$-Fresnel defocusing elements may vary according to their radial distance from a geometrical center and/or optical center of the optical lens on which they are superimposed. For example, the diffraction efficiency of the two main orders of diffraction 0 and +1 of each $\pi$-Fresnel defocusing element may increase, decrease, or increase and further decrease according to the radial distance.

The defocusing area may comprise diffractive microstructures. Preferably, the diffractive microstructures may form a pattern producing a discontinuous phase shift on light passing through said diffractive area, for example for a specific range of wavelengths. For example, the diffractive microstructures may have a pillar shape having a lateral resolution greater than or equal to 250 nm, preferably 1.0 $\mu$m, more preferably 3.0 $\mu$m, for example 10 $\mu$m, and smaller than or equal to 100 $\mu$m, for example 2.0 mm, and/or a height resolution greater than or equal to 0.1 $\mu$m, and smaller than or equal to 10 $\mu$m.

The second optical function of the defocusing areas slowing down the development of the abnormal refraction of the eye of the wearer may be a diffusive optical function. In other words, the defocusing areas may be designed to spread out incident light rays in multiple directions, thereby creating a blur or volume of non-focused light. For example, at least part, for example more than 50%, preferably all of the defocusing areas are diffusive defocusing elements.

The diffusive optical function may be a scattering optical function dispersing incident light. For example, at least part, for example more than 50%, preferably all of the defocusing areas may be scattering defocusing elements. Typically, scattering defocusing elements are designed to scatter or diffuse light passing through them, thereby controlling the direction and intensity of light.

The second optical function of the defocusing areas slowing down the development of the abnormal refraction of the eye of the wearer may be a holographic optical function. The holographic optical function may be a transmissive holographic optical function or a reflective holographic optical function. For example at least part, for example more than 50%, preferably all, of the defocusing areas may be holographic defocusing elements.

The second optical function of the defocusing areas slowing down the development of the abnormal refraction of the eye of the wearer may be an activable optical function. For example, at least part, for example more than 50%, preferably all, of the defocusing areas may be activable defocusing elements.

At least part, preferably more than 50%, for example all, of the at least one filtering zone may surround at least one, preferably more than 50%, for example all, defocusing areas of the optical lens so as to form island-shape defocusing areas. In the example of the disclosure illustrated in figure 1, the optical lens 10 comprises a plurality of island-shape defocusing areas 14 surrounded by a plurality of filtering zones 18 having an annular shape. In the example of the disclosure illustrated in figure 1, each filtering zone 18 surrounds a single island shape defocusing area 14. However, a single filtering area, for example having an annular shape may surround a plurality of island shape defocusing area. In the example illustrated in figure 4, a plurality of filtering zones 18 having a ring shape are organized so as to surround a plurality of defocusing areas 14 organized along a plurality of concentric rings.

At least part, preferably more than 50%, for example all, of the at least one filtering zone may surround at least part of the refraction area of the optical lens so as to form island-shape refractive areas. In the example of the disclosure illustrated in figure 3, the optical lens 10 comprises a refraction area 12a and a plurality of island-shape refractive areas 12b surrounded by a plurality of filtering zones 18 having an annular shape.

The at least one filtering zone may have a base shape or an outer contour inscribable in a bounding circle $(Ci)$ having a radius $(Ri)$ smaller than or equal to 1.5 mm preferably smaller than or equal to 1.0 mm. When the optical lens comprises a plurality of filtering zones, at least part, preferably more than 50%, for example all the filtering zones may have a base shape or an outer contour inscribable in a bounding circle $(Ci)$ having a radius $(Ri)$ smaller than or equal to 1.5 mm preferably smaller than or equal to 1.0 mm. In the sense of the disclosure, the term "bounding circle" should be understood as the smallest circle that can fully enclose the base shape or outer contour of the filtering element.

According to an embodiment of the invention, the optical lens comprises a refraction area having at least a first refractive power $(PPO)$ based on a prescription adapted for the eye of the wearer and a plurality of defocusing elements, each defocusing element having an average mean refractive power $(Pi)$ different from the first refractive power $(PPO)$ of the refraction area. Each defocusing element may have a base shape inscribable in a bounding circle $(Ci)$ having a radius $(Ri)$ smaller than or equal to 1.5 mm, for example smaller than or equal to 1.0 mm. For at least part of the defocusing elements, one may define an annular area $(Ai)$ surrounding said defocusing element and covering at least part of a periphery of the defocusing element and at least part of the refraction area surrounding the defocusing element. Each annular area $(Ai)$ may have a diameter greater than or equal to 75% of the radius $(Ri)$ of the bounding circle $(Ci)$ in which the defocusing element is inscribed and smaller than 125% of the radius $(Ri)$ of said bounding circle $(Ci)$. Each annular area $(Ai)$ may have a thickness greater than or equal to 1% of the radius $(Ri)$ of the bounding circle $(Ci)$ in which the defocusing element is inscribed and smaller than 18% of the radius $(Ri)$ of said bounding circle $(Ci)$. Each annular area $(Ai)$ may be a filtering zone comprising a filtering function reducing the transmission of light passing through it over a range of wavelength comprised in the visible wavelength range so that the transmission value Tlum is smaller than or equal to 50%.

It is usual to apply different kind of coatings, such as hard coating, abrasion resistant coating or any other known coating over at least one surface of an optical lens during the manufacturing process. For the sake of simplicity, geometrical structures and/or the optical functions of the optical lens and/or the elements it comprises have been described for an optical lens free of any coating. However, all the features described in the above paragraphs could also be applied to a coated optical lens.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Many further modifications and variations will be apparent to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

**Claims**

1. An optical lens intended to be worn in front of an eye of a wearer, the optical lens comprising:

    - a refraction area having at least a first refractive power (PPO) based on a prescription adapted for the eye of the wearer;
    - at least one filtering zone, said at least one filtering zone comprising at least a filtering function reducing the transmission of light passing through it over a range of wavelength comprised in the visible wavelength range so that the transmission value Tlum is smaller than or equal to 50%,

    **characterized in that** a projection of the at least one filtering zone over a measuring plane is not convex and that a part of the optical lens corresponding to the complementary zone of the projected filtering zone has a transmission value Tlum greater than or equal to 90%.

2. The optical lens according to claim 1, wherein at least part of the filtering zone surrounds at least one independent island-shape defocusing area.

3. The optical lens according to claim 2, wherein the at least one filtering zone has an outer contour inscribable in a bounding circle (Ci) having a radius (Ri) smaller than or equal to 1.5 mm preferably smaller than or equal to 1.0 mm.

4. The optical lens according to any of claims 2 to 3, wherein at least part of, for example all, the independent island-shape defocusing areas are refractive defocusing elements having an average mean refractive power (Pi) different from the first refractive power (PPO) of the refraction area.

5. The optical lens according to any of claims 2 to 3, wherein at least part of, for example all, the independent island-shape defocusing areas comprise diffractive microstructures.

6. The optical lens according to claim 5, wherein the diffractive microstructures form a pattern producing a discontinuous phase shift on the light crossing the diffractive microstructures.

7. The optical lens according to any of claims 5 or 6, wherein the diffractive microstructures have a pillar shape having a lateral resolution greater than or equal to 250 nm, preferably 1.0 $\mu$m, more preferably 3.0 $\mu$m, for example 10 $\mu$m, and smaller than or equal to 100 $\mu$m, for example 2.0 mm, and/or a height resolution greater than or equal to 0.1 $\mu$m, and smaller than or equal to 10 $\mu$m.

8. The optical lens according to any of claims 1 to 7, wherein at least part of the filtering zone surrounds at least one island shape refraction area.

9. The optical lens according to any of claims 1 to 8, wherein the filtering function of the at least one filtering zone is an absorption function.

10. The optical lens according to claim 9, wherein the absorption function has a spatial gaussian profile.

11. The optical lens according to any of claims 1 to 9, wherein the filtering function of the at least one filtering zone is a phase shift function.

12. The optical lens according to any of claims 1 to 9, wherein the filtering function of the at one filtering zone is a scattering function.

**13.** The optical lens according to any of claims 1 to 12, wherein the filtering function of the at least one filtering zone is a blue filtering function reducing the transmission of light comprised in the wavelength range between 380 nm and 500 nm.

**14.** The optical lens according to any of claims 1 to 12, wherein the filtering function of the at least one filtering zone is a red filtering function reducing the transmission of light in the wavelength range between 550nm and 700nm.

**15.** The optical lens according to any of claims 1 to 14, wherein within an annular region of the optical lens having an inner diameter greater than 9 mm and an outer diameter smaller than 57 mm, and comprising a geometrical center located at a distance from an optical center of the lens element smaller than 1mm, the ratio between the sum of areas of the parts of the defocusing areas located inside said annular region and the area of said annular region is comprised between 3% and 80%, preferably between 20% and 70%, preferably between 30% and 60%, and more preferably between 40% and 50%.

Fig. 1

Fig. 3

F1

14

12

10

18

Fig. 2A

F1

14

12

10

10a

18

10b

F2

Fig. 2B

Fig. 4

Europäisches
Patentamt

European
Patent Office

Office européen
des brevets

# EUROPEAN SEARCH REPORT

**Application Number**

EP 24 30 7260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/094559 A1 (LIN EN-PING [TW] ET AL) 21 March 2024 (2024-03-21) * paragraph [0043] - paragraph [0217] * ----- | 1,2,4-14 | INV. G02C7/02 G02C7/10 |
| X | CN 217 425 856 U (ZHUHAI FEITELAN MEDICAL TECH CO LTD) 13 September 2022 (2022-09-13) * paragraph [0002] - paragraph [0040]; figures 6, 7 * ----- | 1,2,4-15 | |
| A | US 2022/342233 A1 (GAWNE TIMOTHY JERNER [US] ET AL) 27 October 2022 (2022-10-27) * paragraph [0014] - paragraph [0113]; figure 6b * ----- | 1-15 | |
| A | US 5 260 727 A (OKSMAN HENRY C [US] ET AL) 9 November 1993 (1993-11-09) * column 2, line 29 - line 48 * ----- | 10 | |
| A | CA 2 407 082 A1 (UNIV ROCHESTER [US]) 8 November 2001 (2001-11-08) * page 14 * ----- | 10 | **TECHNICAL FIELDS SEARCHED (IPC)** |
| A | EP 4 258 043 A1 (ESSILOR INT [FR]; ECOLE NAT DES TRAVAUX PUBLICS DE LETAT [FR]) 11 October 2023 (2023-10-11) * paragraph [00015] * ----- | 10 | G02C |

-/--

The present search report has been drawn up for all claims

| Place of search | Date of completion of the search | Examiner |
|---|---|---|
| Munich | 14 May 2025 | Albero Silvestre, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................
& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 30 7260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KOLENATÝ DAVID ET AL: "High-performance thermochromic VO2-based coatings with a low transition temperature deposited on glass by a scalable technique", SCIENTIFIC REPORTS, vol. 10, no. 1, 6 July 2020 (2020-07-06), XP093277267, US ISSN: 2045-2322, DOI: 10.1038/s41598-020-68002-5 Retrieved from the Internet: URL:https://www.nature.com/articles/s41598-020-68002-5> * Page 3, Equations * ----- | 1-15 | |
| A | KIM JONGBAE ET AL: "Recent Advances in Fabrication of Flexible, Thermochromic Vanadium Dioxide Films for Smart Windows", NANOMATERIALS, vol. 11, no. 10, 11 October 2021 (2021-10-11), page 2674, XP093146038, ISSN: 2079-4991, DOI: 10.3390/nano11102674 * Page 3, equations * ----- | 1-15 | TECHNICAL FIELDS SEARCHED (IPC) |

The present search report has been drawn up for all claims

| Place of search | Date of completion of the search | Examiner |
|---|---|---|
| Munich | 14 May 2025 | Albero Silvestre, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 30 7260

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2025

| Patent document cited in search report | | | Publication date | Patent family member(s) | | Publication date |
|---|---|---|---|---|---|---|
| US 2024094559 | A1 | | 21-03-2024 | JP | 7002413 B2 | 20-01-2022 |
| | | | | JP | 2019008288 A | 17-01-2019 |
| | | | | US | 2018373059 A1 | 27-12-2018 |
| | | | | US | 2020285072 A1 | 10-09-2020 |
| | | | | US | 2022187622 A1 | 16-06-2022 |
| | | | | US | 2024094559 A1 | 21-03-2024 |
| CN 217425856 | U | | 13-09-2022 | NONE | | |
| US 2022342233 | A1 | | 27-10-2022 | CN | 114503015 A | 13-05-2022 |
| | | | | EP | 4031934 A1 | 27-07-2022 |
| | | | | US | 2022342233 A1 | 27-10-2022 |
| | | | | WO | 2021055162 A1 | 25-03-2021 |
| US 5260727 | A | | 09-11-1993 | US | 5260727 A | 09-11-1993 |
| | | | | WO | 9402878 A1 | 03-02-1994 |
| CA 2407082 | A1 | | 08-11-2001 | AU | 5704201 A | 12-11-2001 |
| | | | | AU | 2001257042 B2 | 19-05-2005 |
| | | | | BR | 0110370 A | 18-02-2003 |
| | | | | CA | 2407082 A1 | 08-11-2001 |
| | | | | CN | 1426286 A | 25-06-2003 |
| | | | | EP | 1278451 A1 | 29-01-2003 |
| | | | | JP | 4289814 B2 | 01-07-2009 |
| | | | | JP | 2003532150 A | 28-10-2003 |
| | | | | KR | 20020093917 A | 16-12-2002 |
| | | | | MX | PA02010624 A | 14-10-2003 |
| | | | | TW | 500604 B | 01-09-2002 |
| | | | | US | 6338559 B1 | 15-01-2002 |
| | | | | WO | 0182791 A1 | 08-11-2001 |
| EP 4258043 | A1 | | 11-10-2023 | EP | 4258043 A1 | 11-10-2023 |
| | | | | WO | 2023194405 A1 | 12-10-2023 |

EPO FORM P0459

For more details about this annex : see Official Journal of the European Patent Office, No. 12/82